# EUROPÄISCHE PATENTSCHRIFT

(11) **EP 1 364 820 B1**
(45) Veröffentlichungstag und Bekanntmachung des Hinweises auf die Patenterteilung: **16.02.2005**
(21) Anmeldenummer: 03010135.6
(22) Anmeldetag: 05.05.2003
(51) Int. Cl.: B60H 1/34

(54) **Vorrichtung und Verfahren zur Beheizung und/oder Belüftung eines Innenraumes für ein Fahrzeug**
Apparatus and Method for heating and/or cooling the interior of a vehicle
Dispositif et procédé pour chauffer et/ou aérer l'habitacle d'un véhicule

(30) Priorität: 04.05.2002 DE 10220024
(43) Veröffentlichungstag der Anmeldung: 26.11.2003
(73) Patentinhaber: Behr GmbH & Co. KG, 70469 Stuttgart (DE)
(72) Erfinder: Crochemore, Laurent, 73269 Hochdorf (DE)
(74) Vertreter: Grauel, Andreas, Dr.

(56) Entgegenhaltungen:
- EP-A- 1 048 499
- DE-A- 19 910 774
- DE-A- 19 934 187
- DE-A- 19 956 259

## Beschreibung

Die Erfindung betrifft eine Vorrichtung zur Beheizung und/oder Belüftung eines Innenraumes für ein Fahrzeug. Sie betrifft weiter ein Verfahren zur Beheizung und/oder Belüftung des Innenraums.

Eine solche herkömmliche Vorrichtung umfasst ein Belüftungselement, z. B. ein Gebläse zur Erzeugung eines Luftstromes, der über Belüftungskanäle in mehrere in den Innenraum mündende Auslässe geführt wird. Zur Verteilung des Luftstroms, z. B. eines Kaltluftstromes oder eines Warmluftstroms, auf unterschiedlicher Belüftungskanäle bzw. zur Einstellung des Luftstroms am jeweiligen Auslass sind einstellbare Klappen als Verteilermittel vorgesehen. Diese können automatisch oder manuell betätigt werden. Für eine gleichmäßige Belüftung und/oder Beheizung des Fahrzeuginnenraumes sind die Auslässe an unterschiedlichen Punkten im Fahrzeuginnenraum vorgesehen, z. B. im Fußbereich, im Seitenbereich oder im Frontbereich, insbesondere im Bereich der Frontscheibe zu deren Entfrostung.

Zur Steuerung des Luftstromes an den verschiedenen Punkten oder Positionen der Auslässe ist eine Steuereinheit vorgesehen. Eine derartige Steuereinheit ist beispielsweise aus der DE 199 34 187 A1 bekannt. Dabei ist die dort offenbarte Steuerung des Kalt- und Warmluftstromes begrenzt auf die Mischung dieser beiden Luftströme und deren Verteilung auf verschiedene Auslässe. Hierbei kommt es bedingt durch eine alle Auslässe speisenden Mischkammer, z. B. durch die Drosselung des Luftstromes an einem der Auslässe zu Auswirkungen auf die Luftströme an den anderen Auslässen. Beispielsweise führt eine Reduzierung des Luftstromes an einer der Auslässe zu einer Luftmengenerhöhung an den anderen Luftauslässen. Dies führt zu einer ungleichmäßigen Belüftung und/oder Beheizung des Innenraumes des Fahrzeugs, insbesondere zu einer Beeinträchtigung des thermischen Komfortempfindens der Fahrzeuginsassen.

Der Erfindung liegt daher die Aufgabe zugrunde, bei einer Vorrichtung der Eingangs genannten Art eine gleichmäßige Belüftung und/oder Beheizung des Fahrzeuginnenraumes sicherzustellen, welche zu einem verbesserten thermischen Komfortempfinden von Fahrzeuginsassen führt.

Die Aufgabe wird erfindungsgemäß gelöst durch eine Vorrichtung zur Beheizung und/oder Belüftung eines Innenraumes für ein Fahrzeug mit einem Belüftungselement zur Erzeugung eines Luftstromes und mindestens einem an dem Belüftungselement angeschlossenen Belüftungskanal, der mit einer einstellbaren Klappe versehen ist und in mehrere in den Innenraum führende Auslässe mündet, wobei zur Aufnahme der Stellung einer der Klappen ein zugehöriger Stellungssensor vorgesehen ist, der zur Steuerung der Stellung der anderen Klappen in Abhängigkeit von der Stellung der betreffenden Klappe mit einer Steuereinheit verbunden ist.

Die Erfindung geht dabei von der Überlegung aus, dass für eine gleichmäßige Belüftung und/oder Beheizung eines Fahrzeuginnenraumes alle im gesamten Fahrzeuginnenraum verteilt angeordneten Auslässen zur Einführung eines Luftstroms, z. B. eines Warmluftstromes und/oder Kaltluftstromes, zusammenwirken. Durch das Zusammenwirken der verteilt angeordneten Auslässe im Fahrzeuginnenraum wird der durch ein Belüftungselement oder Gebläse erzeugte Luftstrom und somit eine bestimmte Luftmenge über die Auslässe im Fahrzeuginnenraum verteilt. Die Verteilung der durch das Gebläse vorgegebenen Luftmenge wird durch ein Steuergerät bestimmt, welches ggf. einzelne als Düsen ausgebildete Auslässe für eine definierten Luftmengeneinführung drosselt. Hierdurch kommt es an anderen Auslässen bedingt durch die Reduzierung des Luftstromes an der gedrosselten Düse oder den gedrosselten Auslaß zu einer Luftstromerhöhung. Durch eine Verkettung der den Luftstrom bewirkenden Auslässe kann eine Änderung des Luftstroms an einer der Auslässe analysiert und zu einer Anpassung der Luftströme an den anderen Auslässen verwendet werden. Hierdurch wird zum einen eine gleichmäßige und somit auch gleich temperierte Beheizung und/oder Belüftung des Fahrzeuginnenraums sichergestellt, wobei insbesondere ein besonders gutes thermisches Komfortempfinden der Fahrzeuginsassen ermöglicht ist.

Zweckmäßigerweise ist die Klappe zur Lenkung und/oder Steuerung des Luftstromes um eine Achse schwenkbar angeordnet. Alternativ oder zusätzlich ist die Klappe verschiebbar angeordnet. Beispielsweise kann die Klappe vertikal und/oder horizontal um die als Schwenk- oder Drehachse ausgebildeten Achse geschwenkt oder geneigt werden. Bei der verschiebbaren Anordnung der Klappe kann diese hoch, tief, links und/oder rechts verschoben werden. Bei einer sowohl die Verschiebung als auch die Drehung ermöglichenden Anordnung der Klappe kann die Verschiebungsbewegung durch die Drehbewegung der Klappe oder umgekehrt korrigiert werden. Bei beiden Ausführungsformen ist die Klappe, die mit dem Luftauslass verbunden ist, zwischen einer geschlossenen und einer offenen Stellung einstellbar. Hierdurch ist in einer ersten Betriebsart der zugehörige Luftauslass vollständig geschlossen und in einer zweiten Betriebsart vollständig geöffnet. Durch Verstellung der Klappe mit verschiedenen horizontalen und/oder vertikalen Öffnungswinkeln ist der durch den betreffenden Auslass geführte Luftstrom besonders einfach und schnell einstellbar. Je nach Art und Ausführung der Klappe kann diese automatisch und/oder manuell eingestellt werden.

Bevorzugterweise ist zur Aufnahme der Stellung der Klappe der Stellungssensor an der Drehachse angeordnet. Alternativ ist der Stellungssensor an Zapfen angeordnet. Als Stellungssensor dient zweckmäßigerweise ein analoger oder digitaler Winkelsensor. Beispielsweise dient als analoger Winkelsensor ein Potentiometer. Dabei ist das Potentiometer mit einer mechanischen Umdrehung, insbesondere mit einem Drehwinkel von 360°C, ausgebildet. Hierbei reicht eine Umdrehung für den gesamten Widerstandsbereich vollständig aus. Darüber hinaus kann ein derartiger Stellungssensor besonders einfach in eine bereits bestehende Klima- und/oder Belüftungsanlage integriert werden. Zur Erfassung der Verschiebungsbewegung ist der Stellungssensor vorteilhafterweise als Schiebesensor ausgebildet. Hierbei ist der Schiebesensor beispielsweise in der Bewegungs- oder Verschiebungsebene an der Achse angeordnet.

Zweckmäßigerweise ist die Klappe zwischen dem Stellungssensor und einer die Stellung der Klappe bewirkenden Einstellungseinheit oder Steuerungseinheit angeordnet. Bevorzugt sind der Stellungssensor und die Einstellungseinheit endseitig an der Drehachse oder an den Zapfen angeordnet. Je nach Art und Ausführung der Vorrichtung zur Beheizung und/oder Belüftung des Fahrzeuginnenraums kann die Klappe zur Einstellung des in den Fahrzeuginnenraum zu führenden Luftstroms im Belüftungskanal eingangs- und/oder ausgangsseitig angeordnet sein. Bei einer eine Klimaanlage umfassenden Vorrichtung ist die Klappe eingangsseitig, insbesondere strömungseihgangsseitig, im an der Klimaanlage angeschlossenen Belüftungskanal angeordnet. Eine unmittelbar am Auslass angeordnete weitere Klappe kann je nach Art und Ausführung der Vorrichtung entfallen. Bei einer lediglich ein Belüftungs- und Heizungssystem aufweisenden Vorrichtung ist die Klappe ausgangsseitig, insbesondere strömungsausgangsseitig, im Belüftungskanal, z.B. in einem in den Fahrzeuginnenraum führenden Auslass, angeordnet.

Die zweitgenannte Aufgabe wird erfindungsgemäß gelöst durch ein Verfahren zur Beheizung und/ oder Belüftung eines Innenraumes für ein Fahrzeug durch einen mittels eines Belüftungselements erzeugten Luftstroms, der über einen in mehrere Auslässe mündenden Belüftungskanal in den Innenraum geführt und mittels einer Einstellklappe gesteuert wird, wobei die Stellung einer der Klappen erfasst und anhand derer die Stellung mindestens einer der anderen Klappen angepasst wird. Beispielsweise umfasst eine Heizungs-, Lüftungs- oder eine Klimaanlage ein oder mehrere Klappen, die durch ein oder mehrere Aktuatoren in ihrer Stellung veränderbar sind. Hierzu werden anhand des Stellungssenors die Stellung einer oder mehrerer Klappen erfasst und miteinander derart verkettet, dass durch die anderen Auslässe der betreffenden Anlage ein gleichmäßiger Luftstrom, insbesondere eine im wesentlichen gleiche Luftmenge, geführt wird.

Zweckmäßigerweise wird die Stellung einer der Klappen erfasst und anhand eines alle Klappen des Innenraumes umfassenden Luftverteilungssystems mittels einer Steuereinheit bewertet. Beispielsweise umfasst die Heizungs-, Lüftungs- oder Klimaanlage ein das Luftverteilungssystem zugehöriges Belüftungselement oder Gebläse, welches den gesamten Luftstrom des Luftverteilungssystems erzeugt. Anhand der Erfassung der Stellung der jeweiligen Klappe und einer Bewertung einer Änderung der Klappenstellung wird die daraus resultierende Änderung der Luftverteilung im gesamten Luftverteilungssystem und die daraus resultierende Änderung der durch die verschiedenen Auslässe geführten Luftströme analysiert und bewertet.

Vorzugsweise wird anhand der bewerteten Stellung der betreffenden Klappe ein Steuersignal zur Änderung der Stellung einer der anderen Klappen generiert. Hierdurch ist sichergestellt, dass durch Drosselung des Luftstromes aufgrund der Änderung der Stellung einer der Klappen zur Beibehaltung des Luftstromes an den anderen Klappen deren Stellung ebenfalls geändert und somit angepasst wird.

Alternativ oder zusätzlich wird anhand der bewerteten Stellung der betreffenden Klappe ein Steuersignal zur Änderung eines Sollwerts für einen mittels des Belüftungselements erzeugten Luftstroms generiert. Hierdurch ist alternativ zur Änderung der Stellung der anderen Klappen eine Anpassung des im gesamten Luftverteilungssystems erzeugten Luftstromes in Abhängigkeit von der Drosselung einer der Klappen bewirkt.

Die mit der Erfindung erzielten Vorteile bestehen insbesondere darin, dass zur Vermeidung von bedingt durch Luftstromänderungen verursachten Beeinträchtigungen des Komfortempfindens von Fahrzeuginsassen die im Fahrzeuginnenraum verteilt angeordneten Auslässe mit den zugehörigen Klappen derart miteinander verkettet werden, dass bei Änderung der Stellung einer der Klappen die Stellung mindestens einer der anderen Klappen angepasst wird. Somit werden die Auswirkungen der Änderung der Klappenstellung einer einzelnen Klappe auf die anderen Auslässe, z. B. Düsen, weitgehend neutralisiert, so dass eine Beeinträchtigung des Wärme- oder Komfortempfindens von Fahrzeuginsassen sicher vermieden ist.

Ausführungsbeispiele der Erfindung werden anhand einer Zeichnung näher erläutert. Darin zeigen:
- Figur 1: schematisch eine Vorrichtung zur Beheizung und/oder Belüftung eines Innenraums eines Fahrzeugs mit einem Luftverteilungssystem,
- Figur 2: schematisch eine Ausführungsform für ein Luftverteilungssystem mit mehreren Auslässen,
- Figur 3: schematisch einen Auslass gemäß Figur 2 mit einer einstellbaren Klappe, und
- Figur 4, 5: ein schaltungstechnisches Schemata für verschiedene Ausführungsformen der Vorrichtung nach Figur 2.

Einander entsprechende Teile sind in allen Figuren mit den gleichen Bezugszeichen versehen.

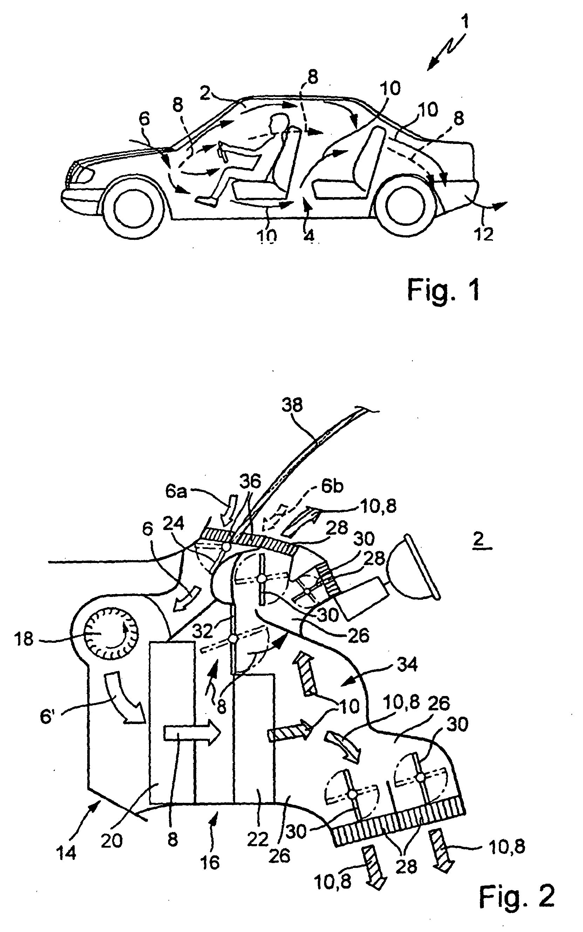

Figur 1 zeigt ein Fahrzeug 1 mit einem Fahrzeuginnenraum 2, welcher für eine gleichmäßige Klimatisierung und/oder Belüftung ein Luftverteilungssystem 4 aufweist. Das Luftverteilungssystem 4 umfasst dabei eine Frischluftzuführung 6, welche je nach Art und Ausführung des Luftverteilungssystems 2 in einen Kaltluftstrom 8 und einen Warmluftstrom 10 mündet, der den Fahrzeuginnenraum 2 gleichmäßig durchströmt. Der Kaltluftstrom 8 und der Warmluftstrom 10 verlassen den Fahrzeuginnenraum 2 zur Mischung mit Außenluft 12.

Figur 2 zeigt eine Vorrichtung 14 zur Belüftung und/oder Beheizung des Fahrzeuginnenraumes 2 zur Erzeugung des Kaltluftstroms 8 und/oder des Warmluftstroms 10 gemäß Figur 1. Die Vorrichtung 14 umfasst wie in Figur 2 gezeigt ein Klimatisierungssystem 16, umfassend ein als Gebläse ausgebildetes Belüftungselement 18, einen Verdampfer 20 für einen Kältekreislauf und einen nachgeschalteten Heizkörper oder Heizelement 22 für einen Heizkreislauf. Der mittels des Belüftungselements 18 aus dem Frischluftstrom 6 erzeugte Luftstrom 6 wird dem Verdampfer 20 zur Erzeugung des Kaltluftstroms 8 und/oder dem Heizelement 22 zur Erzeugung des Warmluftstroms 10 zugeführt. Zur Einstellung des Frischluftstromes 6 ist eine Klappe 24 zur Zuführung von Außenluft 6a oder Fahrzeuginnenluft 6b für einen Umluftbetrieb des Klimatisierungssystems 16 vorgesehen.

Zur Klimatisierung des Fahrzeuginnenraumes 2 wird je nach Einstellung des Klimatisierungssystems 16 der Warmluftstrom 10 und/oder der Kaltluftstrom 8 über eine Mehrzahl von Belüftungskanälen 26 in mehrere in den Fahrzeuginnenraum 2 mündende Auslässe 28 geführt. Die Auslässe 28 sind bevorzugt als Düsen, insbesondere als verstellbare Düsen ausgebildet. Zur Einstellung des jeweiligen Kaltluftstroms 8 und/oder des Warmluftstroms 10 sind den Auslässen 28 jeweils eine einstellbare Klappe 30 zugeordnet. Je nach Art und Ausführung der Vorrichtung 14 kann die Klappe 30 eingangs- und/oder ausgangsseitig im Belüftungskanal 26 angeordnet sein. Bei einer das Klimatisierungssystem 16 umfassenden Vorrichtung 14 sind die Klappen 30 strömungseingangsseitig in nicht näher dargestellter Weise als sogenannte Klimaanlagen-Klappe im Belüftungskanal 26 angeordnet. Hierbei kann auf die drosselbaren Düsen oder Absperrungen der Auslässe 28 verzichtet werden. Diese Funktion wird dabei allein durch die Klappen 30 des Klimatisierunssystems 16 ausgeführt. Bei einer Vorrichtung 14 ohne Klimatisierungssystem 16 sind die Klappen 30 strömungsausgangsseitig im Belüftungskanal 26 angeordnet. In Abhängigkeit vom Ausstattungsgrad der Vorrichtung 14 kann somit die Position der einstellbaren Klappen 30 im Belüftungskanal 26 variieren.

Zur Temperatureinstellung des in den Fahrzeuginnenraum 2 geführten Luftstroms können der Warmluftstrom 10 und der Kaltluftstrom 8 über eine einstellbare Klappe 32 gemischt werden. Hierzu ist die Klappe 32 als Mischklappe ausgebildet. D.h. ein erster mehr oder minder großer Teilstrom des Kaltluftstroms 8 wird durch den Heizkörper oder das Heizelement 22 zur Bildung des Warmluftstroms 10 geführt. Der zweite Teil des Kaltluftstroms 8 wird über die Mischklappe 32 am Heizelement 22 vorbeigeführt und somit nicht aufgewärmt. Je nach Stellung der als Mischklappe ausgebildeten Klappe 32 kann somit der Kaltluftstrom 8 und der Warmluftstrom 10 in einem dem Heizelement 22 nachgeschalteten Mischraum 34 geführt und dort gemischt werden.

Je nach Art und Ausführung des Klimatisierungssystems 16 sind die dieses repräsentierenden Elemente bevorzugt symmetrisch, d. h. je Fahrzeugseite vorgesehen. Für eine gleichmäßige Temperierung des Fahrzeuginnenraumes sind die Elemente des Klimatisierungssystems 16 bevorzugt automatisch einstellbar. Alternativ kann anstelle des Klimatisierungssystems 16 ein einfaches, nicht näher dargestelltes Luftverteilungssystem 4 vorgesehen sein. Dabei umfasst ein derartiges Belüftungssystem lediglich das als Gebläse ausgebildete Belüftungselement 18 und daran angeschlossene Belüftungskanäle 26 zur Verteilung des Luftstromes 6 auf die in den Fahrzeuginnenraum 2 mündende Auslässe 28. Eine weitere Alternative sieht anstelle des Klimatisierungssystems 16 lediglich ein aus einem Belüftungssystem und einem nicht näher dargestellten Heizungssystem kombiniertes Luftverteilungssystem 4 vor. Dabei umfasst ein derartiges Luftverteilungssystem 4 sowohl das Belüftungselement 18 als auch das Heizelement 22 und daran angeschlossen die Belüftungskanäle 26 mit den Auslässen 28.

Im Betrieb des Klimatisierungssystems 16 wird mittels des als Gebläse ausgebildeten Belüftungselements 18 über Einlassöffnungen 36 der Frischluftstrom 6 angesaugt und dem Verdampfer 20 zur Luftabkühlung bzw. - entfeuchtung zugeführt. Zur Lufttemperierung wird anschließend der Kaltluftstrom 8 dem Heizelement 22 zugeführt. Über die Belüftungskanäle 26 und den jeweils zugehörigen Auslässen 28 wird dann der Warmluftstrom 10 bzw. der Kaltluftstrom 8 oder eine Mischung aus Warmluftstrom 10 und Kaltluftstrom 8 dem Fahrzeuginnenraum 2 zugeführt.

Zur Verteilung der angewärmten oder kalten Luft an unterschiedlichen Orten im Fahrzeuginnenraum, z. B. im Fußraum, im Fondbereich sowie zur Enteisung einer Frontscheibe 38 kann der jeweils zugeführte Kaltluftstrom 8 und/oder Warmluftstrom 10 über die Klappen 30 automatisch und/oder manuell eingestellt werden. Kommt es nun durch Einstellung einer der Klappen 30 in eine neue Position zu einer Änderung des aus dem betreffenden Auslass 28 geführten Kaltluftstroms 8 und/oder Warmluftstroms 10 werden die über dem Mischraum 34 miteinander in Wirkzusammenhang stehenden anderen Auslässe 28 mit den zugehörigen und in unveränderter Stellung positionierten Klappen 30 daran angepaßt und beeinflusst. Beispielsweise kommt es durch Schließen einer der Klappen 30 zu einem Abfall des über diesen Auslass 28 geführten Kaltluftstroms 8 und/oder Warmluftstroms 10, so dass sich der über die anderen Auslässe 28 geführte Kaltluftstrom 8 und/oder Warmluftstrom 10 hinsichtlich der Luftmenge erhöht. Um dies zu vermeiden, wird mindestens eine der anderen Klappen 30 in ihrer Stellung verändert, insbesondere wird deren Stellung an die geänderte Stellung der betreffenden Klappe 30 angepasst.

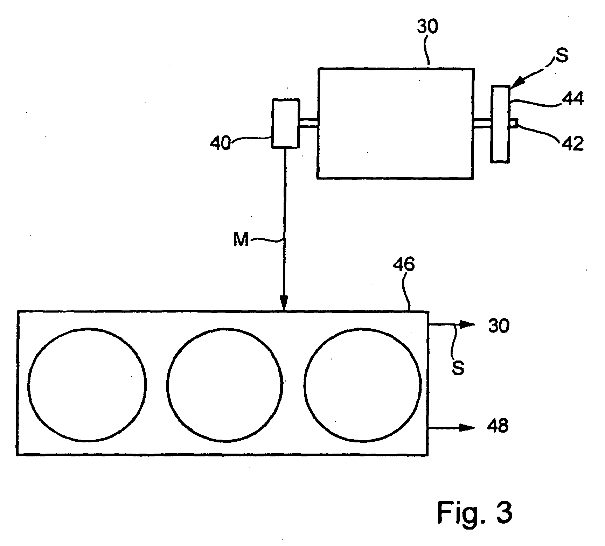

Zur Anpassung der Stellung einer einzelnen Klappe 30 an eine Stellungsänderung einer der anderen Klappen 30 ist, wie in Figur 3 beispielhaft für eine der Klappen 30 dargestellt, ein Stellungssensor 40 zur Erfassung der Stellung oder Position der jeweils zugehörigen Klappe 30 vorgesehen. Die Klappe 30 ist zur Einstellung des über diesen geführten Kaltluftstroms 8 und/oder Warmluftstroms 10 schwenkbar und/oder verschiebbar auf einer Achse 42 angeordnet. Für eine automatische Einstellung der Klappe 30 ist eine zugehörige Einstelleinheit 44, z.B. ein Aktuator oder Motor, vorgesehen. Zusätzlich kann die Einstelleinheit 44 eine manuelle Einstelleinheit, z.B. einen Hebel, umfassen.

Der Stellungssensor 40 ist bevorzugt als analoger oder digitaler Winkelsensor, z.B. als ein Potentiometer, ausgebildet. Zur Erfassung einer Verschiebungsbewegung der Klappe 30 ist der Stellungssensor 40 als Schiebesensor ausgebildet. Der Stellungssensor 40 ist zur Erfassung der Stellung der Klappe 30 anhand eines Messsignals M mit einer Steuereinheit 46 verbunden. Über die Steuereinheit 46 werden die Einstelleinheiten 44 der anderen Klappen 30 zur Verstellung der Position anhand eines Steuersignals S angesteuert. Mit anderen Worten: Bei einer Änderung der Stellung einer der Klappen 30 wird zur Beibehaltung des Luftstromes 8, 10 an den anderen Klappen 30 deren Stellung mittels des Steuersignals S ebenfalls geändert und somit angepasst.

Durch eine derartige an die Änderung der Stellung einer der Klappen 30 angepasste Änderung der Stellung der anderen Klappen 30 mittels der Steuereinheit 46 werden aus der ersten Stellungsänderung resultierende Auswirkungen aufgehoben und somit neutralisiert. Durch die Verkettung der Stellung der Klappen 30 untereinander sind ungewollte Auswirkungen, wie z.B. Luftmengenerhöhungen, sicher vermieden.

Bei einer Änderung der Stellung der Klappe 30 kann diese durch die schwenkbare und/oder verschiebbare Anordnung horizontal und/oder vertikal geneigt bzw. nach oben, unten, tief, links oder rechts verschoben werden. Zur Erfassung der aus einer Änderung der Klappenstellung resultierenden Position der Klappe 30 ist der Stellungssensor 40 an der Achse 42 oder an deren Zapfen angeordnet. Zur Erfassung der Schwenk- und/oder Verschiebebewegung können mehrere Stellungssensoren 40 vorgesehen sein.

Für eine möglichst genaue und quasi stufenlose Einstellung bzw. Anpassung der jeweiligen Stellung der mit der betreffenden Klappe 30 im Wirkzusammenhang stehenden anderen Klappen 30 wird die erfasste Stellungsänderung der betreffenden Klappe 30 bewertet. Dazu wird die betreffende Klappe 30 und deren Stellung anhand des alle Klappen 30 umfassenden Luftverteilungssystems 4 mittels der Steuereinheit 46 analysiert und in Abhängigkeit von der Gesamtanzahl an Klappen 30 und deren jeweiligen Klappenstellung bewertet. Anhand der bewerteten Stellung der betreffenden Klappe 30 wird dann mittels des Steuersignals S die Stellung mindestens einer der anderen Klappe 30 geändert und angepasst.

Alternativ oder zusätzlich zur Steuerung und Anpassung der Stellung der anderen Klappen 30 an die geänderte Stellung einer einzelnen Klappe 30 kann das Belüftungselement 18 mittels des Steuersignals S derart gesteuert werden, dass ein den Luftstrom 6 einstellbarer Sollwert geändert wird. Somit kann in Abhängigkeit von der Änderung der Stellung einer der Klappen 30 sowohl die Stellung der anderen Klappen 30 als auch die Luftmengenerzeugung des Belüftungselements 18 geändert werden. Dies ermöglicht eine besonders gleichmäßige Belüftung und/oder Beheizung des Fahrzeuginnenraums 2, bei welcher sprunghafte Luftstromänderungen durch einzelne Auslässe 28 sicher vermieden sind.

Je nach Art und Ausführung der Steuereinheit 46 kann diese darüber hinaus mit anderen Steuereinheiten 48 anderer Fahrzeugsysteme, z.B. mit einer Steuereinheit für eine Klimaanlage, verbunden sein.

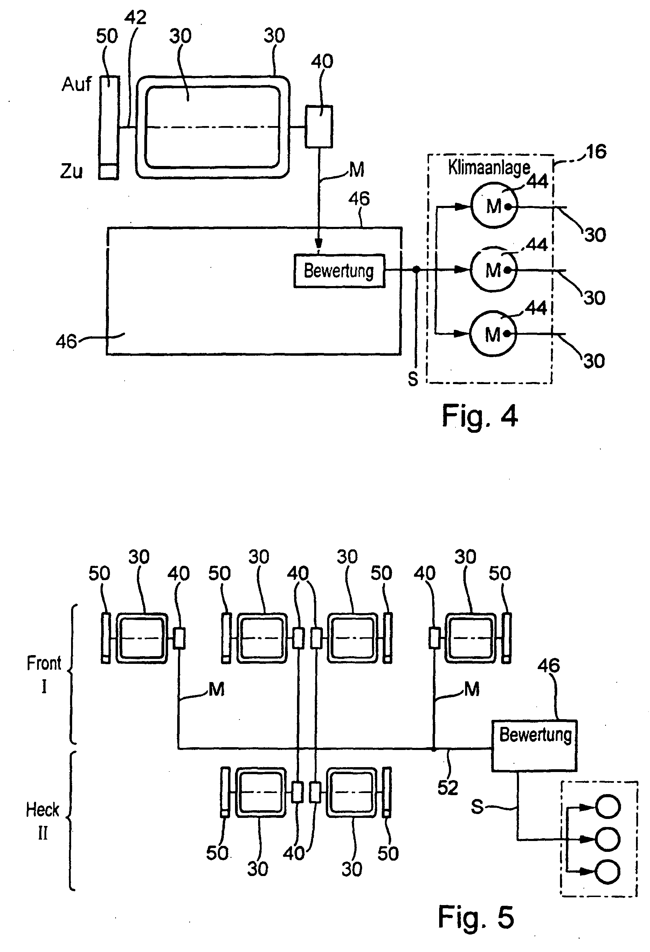

Die Figur 4 zeigt eine alternative Ausführungsform der Vorrichtung 14 mit einem Klimatisierungssystem 16. Dabei wird das aus der Änderung der Klappe 30 mittels der Steuereinheit 46 erzeugte Steuersignal S dem Klimatisierungssystem 16 zugeführt. Mittels des Steuersignals S werden die dem Klimatisierungssystem 16 zugehörigen Klappen 30 anhand der jeweiligen Einstelleinheit 44 in ihrer Stellung an die geänderte Stellung der betreffenden Klappe 30 angepasst. Mit anderen Worten: Wird beispielsweise über ein manuelles Einstellungsorgan 50 der als Düse ausgebildete Auslass 28 und/oder die Klappe 30, welche zur Belüftung des Fußraumes des Fahrzeuges 1 vorgesehen ist, verändert, werden über das mittels der Steuereinheit 46 generierte Steuersignal S die anderen dem Klimatisierungssystem 16 zugehörigen Klappen 30 zur Enteisung der Frontscheibe 38 bzw. zur Belüftung des Frontbereiches des Fahrzeugs mittels der Einstelleinheiten 44 in ihren Stellungen verändert und angepasst.

Beispielhaft wird nachfolgend anhand der Tabellen 1 und 2 der Betrieb der Vorrichtung 14 mit dem Klimatisierungssystem 16 erläutert.

**Tabelle 1**

| | Fahrzeug: Grill, Grillklappe (Auslässe 28, Klappen 30) | | | | | |
|---|---|---|---|---|---|---|
| | Belüftung Front | | | | Belüftung Heck | |
| | Seite, links | Mitte, links | Mitte, rechts | Seite, rechts | links | rechts |
| Start-Bedingungen | 100% offen | 100% offen | 100% offen | 100% offen | 100% offen | 100% offen |
| End-Bedingungen | 100% offen | 100% offen | 0% offen | 25% offen | 100% offen | 40% offen |

Die Tabelle 1 beschreibt eine Ausführungsform für ein Luftverteilungssystem 4 mit fünf in den Fahrzeuginnenraum 2 mündenden Auslässen 28: Im Frontbereich vier Auslässe auf jeder Seite ein Auslass und in der Mitte zwei Auslässe, im Heckbereich auf jeder Seite ein Auslass. Beim Start des Fahrzeugs 1 oder im Betrieb des Luftverteilungssystems 4 sind alle Auslässe 28 vollständig geöffnet. D.h. jeder Auslass 28 wird mit einem zugehörigen Luftstrom 8, 18 von 100% durchströmt. Durch Betätigung der Auslässe 28 "Mitte, rechts", "Seite rechts" und "Heck, rechts" durch den Fahrer oder einen Insassen wird der jeweilige durch den betreffenden Auslass 28 geführte Luftstrom 8, 10 von "100%" auf "0%", "25%", bzw. "40%" gedrosselt. Hierbei wird der Grill oder Auslass 28 bzw. die zugehörige Klappe 30 vom Benutzer in der Stellung entsprechend geändert.

Tabelle 2 zeigt die Anpassung der Stellung der anderen Klappen 30 zur Vergleichmäßigung des in den Fahrzeuginnenraum 2 geführten Luftstromes 8, 10.

**Tabelle 2**

| | Klimaanlagen-Klappe (Klappe 30, strömungseingangsseitig) | | | |
|---|---|---|---|---|
| | Belüftung | | Entfrostung | Fußraum |
| | Front | Heck | | |
| Start-Bedingungen | 100% offen | 100% offen | 10% offen | 10% offen |
| End-Bedingungen | 80% offen | 60% offen | 15% offen | 5% offen |

Beispielhaft wird hier durch Änderung der Stellung der Klappen 30 des Klimatisierungssystems 16 der Luftstrom 8,10 gleichmäßig verteilt. Dazu werden die Klappen 30 für die Frontbelüftung, die Heckbelüftung, die Entfrostung und den Fußraum auf einen Luftstrom von 80%, 60%, 15% bzw. 5% gedrosselt. Alternativ zur Drosselung der Klappen 30 des Klimatisierungssystems können die strömungseingangsseitig im Belüftungskanal 26 angeordneten Klappen 30 zur Drosselung des jeweiligen Luftstroms 8, 10 in ihrer Stellung verändert werden. Bevorzugt wird bei dem Luftverteilungssystem 4 mit Klimatisierungssystem 16 auf die ausgangsseitigen Klappen 30 verzichtet.

Die Figur 5 zeigt eine alternative Ausführungsform der Vorrichtung 14 ohne das Klimatisierungssystem 16. Dabei sind die Stellungssensoren 40 der verteilt im Fahrzeug 1 angeordneten Klappen 30 über ein Datenübertragungssystem 52 mit der Steuereinheit 46 zur Generierung des Steuersignals S zur Anpassung der Stellung der Klappen 30 an die geänderte Stellung einer der Klappen 30 verbunden. Die Klappen 30 sind dabei zu einer Gruppe derart zusammengefasst, dass die im Frontbereich angeordneten Klappen 30 eine erste Gruppe I und die im Heckbereich angeordneten Klappen 30 eine zweite Gruppe II bilden. Bei der Bewertung des von dem jeweiligen Stellungssensor 40 ermittelten Messwertes M für die Stellung der jeweiligen Klappe 30 anhand der Steuereinheit 46 wird die Zuordnung der Klappen 30 zu einer der Gruppen I oder II berücksichtigt. Hierzu wird beispielsweise mit dem Messsignal M vom jeweiligen Stellungssensor 40 ein die Gruppe I oder II repräsentierende Meldung über das Datenübertragungssystem 52 der Steuereinheit 46 zugeführt.

### Bezugszeichenliste

- 1: Fahrzeug
- 2: Fahrzeuginnenraum
- 4: Luftverteilungssystem
- 6: Frischluftzuführung
- 6a: Außenluft
- 6b: Fahrzeuginnenluft
- 8: Kaltluftstrom
- 10: Warmluftstrom
- 12: Außenluft
- 14: Vorrichtung zur Belüftung und/oder Beheizung des Fahrzeuginnenraumes
- 16: Klimatisierungssystem
- 18: Belüftungselement
- 20: Verdampfer
- 22: Heizelement
- 23: Klappe zur Zuführung von Außenluft
- 26: Belüftungskanal
- 28: Auslass
- 30: Klappe
- 32: Mischklappe
- 34: Mischraum
- 36: Einlassöffnungen
- 38: Frontscheibe
- 40: Stellungssensor
- 42: Achse
- 44: Einstelleinheit
- 46, 48: Steuereinheit
- 50: Einstellungsorgan
- 52: Datenübertragungseinheit

- M: Messwert
- S: Steuersignal

## Patentansprüche

1. Vorrichtung zur Beheizung und/oder Belüftung eines Innenraumes (2) für ein Fahrzeug (1) mit einem Belüftungselement (18) zur Erzeugung eines Luftstroms (6) und mindestens einem an dem Belüftungselement (18) angeschlossenen Belüftungskanal (26), der mit einer einstellbaren Klappe versehen ist und in mehrere in den Innenraum (2) führende Auslässe (28) mündet,
**dadurch gekennzeichnet,**
**dass** zur Aufnahme der Stellung einer der Klappen (30) ein zugehöriger Stellungssensor (40) vorgesehen ist, der zur Steuerung der Stellung der anderen Klappen (30) in Abhängigkeit von der Stellung der betreffenden Klappe (30) mit einer Steuereinheit (46) verbunden ist.

2. Vorrichtung nach Anspruch 1,
**dadurch gekennzeichnet,**
**dass** die Klappe (30) zur Lenkung und/oder Steuerung des Luftstroms (6, 8, 10) um eine Achse (42) schwenkbar angeordnet ist.

3. Vorrichtung nach Anspruch 1 oder 2,
**dadurch gekennzeichnet,**
**dass** die Klappe (30) zur Lenkung und/oder Steuerung des Luftstroms (6, 8, 10) verschiebbar angeordnet ist.

4. Vorrichtung nach einem der Ansprüche 1 bis 3,
**dadurch gekennzeichnet,**
**dass** die Klappe (30) zwischen dem Stellungssensor (40) und einer die Stellung der Klappe (30) bewirkenden Einstellungseinheit (44) angeordnet ist.

5. Vorrichtung nach einem der Ansprüche 2 bis 4,
**dadurch gekennzeichnet,**
**dass** der Stellungssensor (40) zur Aufnahme der Stellung der Klappe (30) an der Achse (42) angeordnet ist.

6. Vorrichtung nach einem der Ansprüche 1 bis 4,
**dadurch gekennzeichnet,**
**dass** der Stellungssensor (40) als Winkelsensor ausgebildet ist.

7. Vorrichtung nach einem der Ansprüche 1 bis 6,
**dadurch gekennzeichnet,**
**dass** der Stellungssensor (40) als Schiebesensor ausgebildet ist.

8. Verfahren zur Beheizung und/oder Belüftung eines Innenraumes (2) für ein Fahrzeug (1) durch einen mittels eines Belüftungselements (18) erzeugten Luftstroms (6), der über einen in mehrere Auslässe (28) mündenden Belüftungskanal (26) in den Innenraum (2) geführt und mittels einer einstellbaren Klappe (30) gesteuert wird,
**dadurch gekennzeichnet,**
**dass** die Stellung einer der Klappen (30) erfaßt wird, anhand derer die Stellung mindestens einer der anderen Klappen (30) angepaßt wird.

9. Verfahren nach Anspruch 8,
**dadurch gekennzeichnet,**
**dass** die erfaßte Stellung einer der Klappe (30) anhand eines alle Klappen (30) des Innenraumes (2) umfassenden Luftverteilungssystems (14) mittels einer Steuereinheit (46) bewertet wird.

10. Verfahren nach Anspruch 8 oder 9,
**dadurch gekennzeichnet,**
**dass** anhand der bewerteten Stellung der betreffenden Klappe (30) ein Steuersignal (S) zur Änderung der Stellung einer der anderen Klappen (30) generiert wird.

11. Verfahren nach einem der Ansprüche 8 bis 10,
**dadurch gekennzeichnet,**
**dass** anhand der bewerteten Stellung der betreffenden Klappe (30) ein Steuersignal (S) zur Änderung eines Sollwerts für den mittels des Belüftungselements (18) zu erzeugenden Luftstroms (6) generiert wird.

## Claims

1. Device for heating and/or ventilating an interior (2) for a vehicle (1), with a ventilation element (18) for producing an airflow (6) and with at least one ventilation duct (26) connected to the ventilation element (18), which is provided with an adjustable flap and terminates in a plurality of outlets (28) leading into the interior (2),
**characterised in that**
a position sensor (40) connected to a control unit (46) in order to control the position of the other flaps (30) in dependence on the position of one of the flaps (30) is provided to pick up the position of one of the flaps (30).

2. Device according to claim 1,
**characterised in that**
the flap (30) is pivoted about an axis (42) to direct and/or control the airflow (6, 8, 10).

3. Device according to claim 1 or 2,
**characterised in that**
the flap (30) is capable of sliding to control the airflow (6, 8, 10).

4. Device according to any of claims 1 to 3,
**characterised in that**
the flap (30) is located between the position sensor (40) and a setting unit (44) determining the position of the flap (30).

5. Device according to any of claims 2 to 4,
**characterised in that**
the position sensor (40) is located on the axis (42) to pick up the position of the flap (30).

6. Device according to any of claims 1 to 4,
**characterised in that**
the position sensor (40) is designed as an angle sensor.

7. Device according to any of claims 1 to 6,
**characterised in that**
the position sensor (40) is designed as a slide sensor.

8. Method for heating and/or ventilating an interior (2) for a vehicle (1) by an airflow (6) generated by means of a ventilation element (18), which is fed into the interior (2) via a ventilation duct (26) terminating in a plurality of outlets (28), and which is controlled by means of an adjustable flap (30),
**characterised in that**
the position of one of the flaps (30) is detected and used to adjust the position of at least one of the other flaps (30).

9. Method according to claim 8,
**characterised in that**
the detected position of one of the flaps (30) is evaluated by a control unit (46) with the aid of an air distribution system (14) including all of the flaps (30) of the interior (2).

10. Method according to claim 8 or 9,
**characterised in that**
a control signal (S) for changing the position of one of the other flaps (30) is generated from the evaluated position of the flap (30) in question.

11. Method according to any of claims 8 to 10,
**characterised in that**
a control signal (S) for changing a set value for the airflow (6) to be produced by means of the ventilation element (18) is generated from the evaluated position of the flap (30) in question.

## Revendications

1. Dispositif permettant de chauffer et/ou de ventiler un habitacle (2) d'un véhicule (1), comprenant un élément de ventilation (18) servant à produire un flux d'air (6), et au moins un conduit de ventilation (26) raccordé à l'élément de ventilation (18), lequel conduit de ventilation est doté d'un volet réglable et débouche dans plusieurs sorties (28) passant dans l'habitacle (2),
**caractérisé**
**en ce qu'**il est prévu un capteur de position associé (40) servant à enregistrer la position de l'un des volets (30), lequel capteur de position est connecté à une unité de commande (46) pour la commande de la position des autres volets (30), en fonction de la position du volet concerné (30).

2. Dispositif selon la revendication 1, **caractérisé en ce que** le volet (30) servant à diriger et/ou à réguler le flux d'air (6, 8, 10) est disposé de façon à pouvoir pivoter autour d'un axe (42).

3. Dispositif selon la revendication 1 ou 2, **caractérisé en ce que** le volet (30) servant à diriger et/ou à réguler le flux d'air (6, 8, 10) est disposé en étant mobile.

4. Dispositif selon l'une quelconque des revendications 1 à 3, **caractérisé en ce que** le volet (30) est disposé entre le capteur de position (40) et une unité de réglage (44) agissant sur la position du volet (30).

5. Dispositif selon l'une quelconque des revendications 2 à 4, **caractérisé en ce que** le capteur de position (40) servant à l'enregistrement de la position du volet (30) est disposé sur l'axe (42).

6. Dispositif selon l'une quelconque des revendications 1 à 4, **caractérisé en ce que** le capteur de position (40) est conçu comme un capteur angulaire.

7. Dispositif selon l'une quelconque des revendications 1 à 6, **caractérisé en ce que** le capteur de position (40) est conçu comme un capteur à coulisse.

8. Procédé permettant de chauffer et/ou de ventiler un habitacle (2) d'un véhicule (1) par un flux d'air (6) produit au moyen d'un élément de ventilation (18), lequel flux d'air est guidé, dans l'habitacle (2), par un conduit de ventilation (26) débouchant dans plusieurs sorties (28) et commandé au moyen d'un volet réglable (30),
**caractérisé**
**en ce que** la position de l'un des volets (30) est détectée, volet à l'aide duquel est adaptée la position d'au moins l'un des autres volets (30).

9. Procédé selon la revendication 8, **caractérisé en ce que** la position de l'un des volets (30), détectée à l'aide d'un système de diffusion d'air (14) comprenant tous les volets (30) de l'habitacle (2), est analysée au moyen d'une unité de commande (46).

10. Procédé selon la revendication 8 ou 9, **caractérisé en ce qu'**un signal de commande (S) servant à modifier la position de l'un des autres volets (30) est généré à l'aide de la position analysée du volet concerné (30).

11. Procédé selon l'une quelconque des revendications 8 à 10, **caractérisé en ce qu'**un signal de commande (S) servant à modifier une valeur de consigne pour le flux d'air (6) produit au moyen de l'élément de ventilation (18) est généré à l'aide de la position analysée du volet concerné (30).
